(19) **Europäisches Patentamt**
**European Patent Office**
**Office européen des brevets**

(11) **EP 1 848 152 A1**

(12) **EUROPEAN PATENT APPLICATION**
published in accordance with Art. 158(3) EPC

(43) Date of publication:
**24.10.2007 Bulletin 2007/43**

(51) Int Cl.:
***H04L 12/26*** *(2006.01)*

(21) Application number: **06775403.6**

(22) Date of filing: **17.08.2006**

(86) International application number:
**PCT/CN2006/002085**

(87) International publication number:
**WO 2007/056915 (24.05.2007 Gazette 2007/21)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.11.2005 CN 200510114860**

(71) Applicant: **Huawei Technologies Co Ltd**
**Longgang District, Shenzhen**
**Guangdong 518129 (CN)**

(72) Inventor: **ZHAI, Suping**
**Guangdong 518129 (CN)**

(74) Representative: **Körber, Martin Hans**
**Mitscherlich & Partner**
**Patent- und Rechtsanwälte**
**Postfach 33 06 09**
**80066 München (DE)**

(54) **A METHOD FOR MEASURING MPLS NETWORK PERFORMANCE PARAMETER AND DEVICE AND SYSTEM FOR TRANSMITTING PACKET**

(57) A method for measuring performance parameters of an MPLS network, including: exchanging a message for performance parameter measurement between a first node and a second node; and measuring a performance parameter of the MPLS network according to the message for performance parameter measurement. The embodiments of the present invention also provide an apparatus for measuring performance parameters of an MPLS network. The embodiments of the present invention provides basis for the SLA conformity check in the existing MPLS network. In the embodiments of the present invention, a detailed method for measuring performance parameters of the MPLS network is given, which will provide important reference for the MPLS network planning and the MPLS network layout optimization, and further help the MPLS network to exert its unique advantages to the greatest extent.

Figure 1

**EP 1 848 152 A1**

**Description**

**Field of the Technology**

The present invention relates to network communication technologies, and more particularly, to a method and an apparatus for measuring performance parameters of a Multi-Protocol Label Switching (MPLS) network.

**Background of the Invention**

Telecommunication standardization sector of International Telecommunication Union (ITU-T) Y.1711 defines MPLS network functions including a Connectivity Verification for Label Switched Path of Multi-Protocol Label Switching (MPLS LSP), an LSP cross error detection and an LSP aggregation error detection, and provides detailed definitions for LSP availability states.

No standard, however, has been provided for LSP performance measurement. In practical applications, the performance measurement is an important tool for learning the operation quality of a network. The operation state of a network can be accurately obtained and performance of the network can be optimized by measurement of the performance parameters.

The performance measurement of the MPLS network is necessary for the following reasons:

1) the transmission characteristics of the LSP in the MPLS network need to be measured so as to check the Service Level Agreement (SLA) conformity of the MPLS network and the capability of the MPLS network in providing services;

2) the measurement and the collection of performance parameters of the MPLS network facilitates the deployment of the MPLS network and thus helps to improve the service capacity and further the performance of the MPLS network.

It can be seen in the above description that accurate measurement of the performance parameters of the MPLS network is needed at present and the measurement should be clearly defined and standardized.

Internet Engineering Task Force (IETF) has put forth demand for performance measurement of the MPLS network in a corresponding draft: draft-ietf-mpls-oam-requirements-05.txt. However, no application scheme has been provided by the IETF for the MPLS network performance measurement.

Therefore, there is no technical scheme for performance measurement of the MPLS network which is urgently needed at present.

**Summary of the Invention**

Embodiments of the present invention provide a method and an apparatus for measuring performance parameters of a Multi-Protocol Label Switching (MPLS) network.

A method for measuring performance parameters of a MPLS network includes:

setting a sequence number in a message for performance parameter measurement in a Multi-Protocol Label Switching, MPLS network;
measuring a performance parameter of the MPLS network according to the sequence number in a received message.

The setting the sequence number includes:

setting the sequence number in a loopback message of the MPLS network;
or
setting the sequence number in a message for frame loss measurement, a message for frame delay measurement and/or a message for frame throughput measurement.

The method further includes:

setting a time stamp of sending or receiving time in the message for frame delay measurement or the message for frame delay variation measurement.

The setting the time stamp of sending or receiving time includes:

setting the time stamp of sending or receiving time in a loopback request message, a frame loss request message, a frame delay request message, or a frame throughout request message; or setting the time stamp of sending or receiving time in the loopback request message, the frame loss request message, the frame delay request message, of the frame throughout request message and a loopback reply message, a frame loss reply message, a frame delay reply message, or a frame throughout reply message; wherein the loopback reply message, the frame loss reply message, the frame delay reply message or the frame throughout reply message are reply messages from a side receiving the loopback request message, the frame loss request message, the frame delay request message, of the frame throughout request message to a side sending the loopback request message, the frame loss request message, the frame delay request message, of the frame throughout request message.

In the present invention,

fields in the loopback message includes a function type, a sequence number, an LSP trail termination source identifier, a time stamp of sending time and a time stamp of receiving time;
or,
fields in the frame loss measurement message includes a function type, a sequence number and an LSP trail termination source identifier; and fields in the frame delay measurement message comprises a function type, a sequence number, an LSP trail termination source identifier, a time stamp of sending time and a time stamp of receiving time.

The fields in the messages further includes:

a reserved field, a padding field and/or a verifying field.

The measuring the performance parameter of the MPLS network includes:

measuring a frame delay parameter or a frame delay variation parameter of the MPLS network according to the messages for performance parameter measurement transmitted in the MPLS network and the time stamp of sending time and the time stamp of receiving time in the messages.

The method further includes measuring a frame loss parameter:

calculating, at an MPLS network node, a difference between an amount of the loopback messages sent in a predetermined period of time and an amount of the loopback messages received in the predetermined period of time, and taking the difference as a measurement result of the frame loss parameter; or
taking a difference between a total of sent frames and a total of received frames carried in the message for frame loss measurement, and taking the difference as the result of the frame loss parameter measurement.

The measuring the performance parameter includes measuring a frame delay parameter, and the measuring a frame delay parameter includes:

determining a frame delay parameter, by a receiver of the loopback request message according to a difference between a time stamp of sending time and a time stamp of receiving time in a received loopback request message or a frame delay request message;
or
calculating, the frame delay parameter, by a sender of the loopback request message or the frame delay request message, according to a time stamp of sending time for the loopback request message or a time stamp of sending time for the frame delay request message carried by the loopback reply message or carried by the frame delay reply message, and a time of receiving the loopback reply message or a time of receiving the frame delay reply message.

The determining the frame delay parameter further includes:

adjusting, by the receiver of the loopback request message or the frame delay request message, a difference between the time stamp of sending time and the time stamp of receiving time with a standard time difference between the sender of the loopback request message or the frame delay request message and the receiver of the loopback request message or the frame delay request message when the sender and the receiver of the loopback request message or frame delay request message are not synchronized, and obtaining the frame delay parameter;
or
adjusting, by the sender of loopback request message or the frame delay request message, the frame delay parameter calculated according to a time spent on validity checking of the received loopback reply message or the frame delay reply message, and obtaining a definite frame delay parameter.

The measuring the performance parameter includes measuring a frame delay variation parameter, and the measuring a frame delay variation parameter includes:

taking a difference between the results of two frame delay measurements as a measurement result of a frame delay variation parameter;
and / or,
calculating a group of differences between results of two consecutive frame delay measurements; calculating a average value of the group of differences, and taking the average value as the measurement result of the frame delay variation parameter.

The method further includes:

checking validity of the loopback message, the frame loss message or the frame delay message upon a receipt of the message, and the checking validity comprises checking the validity of the message according to the sequence number of the message; and measuring the performance parameters of the MPLS network when the message is valid.

In the present invention, when an accurate measurement of the frame delay or the frame delay variation parameters is required, measuring the performance parameters of the MPLS network further includes:

measuring the frame delay parameter or the frame delay variation parameter when determining that no MPLS frame is lost according to a result of the frame loss parameter measurement or the sequence number in the received loopback message or the frame loss message.

The determining that no MPLS frame is lost according to the sequence number in the received loopback message or the frame loss message includes:

determining a desired sequence number of the loopback message or the frame loss message at a receiving node according to a setting mode of the sequence number of loopback message or frame loss message;
checking, by a node receiving the loopback message or the frame loss message, whether a sequence number of a received loopback message or a frame loss message is identical with the desired sequence number, and determining that no MPLS frame is lost if the received sequence number is identical with the desired sequence number, otherwise determining that an MPLS frame is lost.

The measuring the performance parameter of the MPLS network further includes:

inserting data of different lengths into frame throughput request messages and frame throughput reply messages for frame throughput measurement, and increasing gradually sending rates of the frame throughput request messages according to the frame lengths;
keeping a record on whether a frame loss occurs with the frame throughput reply message, and taking the sending rate of the frame throughput request message with the frame loss as a measurement result of the throughput.

A message sending apparatus for measuring performance parameters of a Multi-Protocol Label Switching network includes a message sequence number adding unit and a message sending unit, wherein
the message sequence number adding unit, for adding sequence numbers in the messages for measuring performance parameter in a MPLS network; and
the message sending unit, for sending the messages with the sequence numbers in the MPLS network.

The message sequence number adding unit includes:

a loopback message processing unit, for adding sequence numbers in loopback messages of the MPLS network;
or
a measurement message processing unit, for adding sequence numbers in at least one of a message of frame loss measurement, a message of frame delay measurement and a message of frame throughput measurement.

The message sending apparatus further includes:

a time stamp information adding unit, for setting time stamps of sending or receiving time in a message for frame delay measurement or a message for frame delay variation measurement.

A system for measuring performance parameters of a MPLS network includes the message sending apparatus and a performance parameter measurement unit, wherein
the performance parameter measurement unit, for measuring a Multi-Protocol Label Switching, MPLS network performance parameters based on the sequence numbers of the messages sent by the message sending apparatus for measuring the MPLS network performance parameters.

The performance parameter measurement unit includes: a frame delay parameter measurement unit, for measuring a frame delay parameter in the MPLS network based on a message for performance parameter measurement sent in the MPLS network and a time stamp of sending time or a time stamp of receiving time of the message; or a frame delay variation parameter unit, for measuring a frame delay variation parameter in the MPLS network based on the message for performance parameter measurement sent in the MPLS network and the time stamp of sending time or the time stamp of receiving time of the message.

The performance parameter measurement unit further includes:

a frame loss parameter measurement unit, for calculating, at an MPLS network node, a difference between a count of sent loopback messages and a count of received loopback messages in a preset period of time, taking the difference as a measurement result of the frame loss parameter; or calculating a difference between a total of the sent messages and a total of received messages carried in messages of the frame loss measurement, taking the difference as the measurement result of the frame loss parameter.

It can be seen from the technical scheme of the present invention that the embodiments of the present invention provide a basis for the SLA conformity check in the MPLS network. In the embodiments of the present invention, a detailed method for the MPLS LSP performance parameter measurement is given, which provides important reference for an MPLS network planning and an MPLS network layout optimization, and further helps the MPLS network to exert its unique advantages to the greatest extent.

Therefore, the present invention provides a practical method for a standardized measurement of the MPLS network performance parameters.

## Brief Description of the Drawings

Figure 1 is a flow chart of a method in accordance with an embodiment of the present invention.

Figure 2 is a schematic diagram illustrating a structure of a system in accordance with an embodiment of the present invention.

## Detailed Description of the Invention

The present invention provides a method and an apparatus to measure performance parameters of point-to-point on an MPLS LSP, and the performance parameters mainly include: a frame loss, a frame delay, a frame delay variation, and a frame throughput. The measurement of performance parameters is useful only when the network is available, and is of no use when the network is unavailable. The definitions of LSP availability state and unavailability state in the MPLS network are defined in the ITU-T Y.1711.

All steps of the measurement of performance parameters are performed when the network is available. Because when a frame is lost, the network may still be available according to the definition of availability state in the ITU-T Y. 1711, which deems that an LSP is unavailable only when the LSP does not recover within 10 seconds after a failure, sequence numbers need to be added set in measurement messages to obtain more accurate results in the measurements. This is why sequence numbers assure more accurate measurements of the frame delay and the frame delay variation in the MPLS network, i.e., when a frame is lost, the measurements of the frame delay and the frame delay variation will not be performed for the prevention of inaccurate measurements.

The processing of the sequence numbers in the embodiments of the present invention includes:

1) an Ingress Label Switched Router (LSR) sets a sequence number used for checking whether a Frame Loss Replies (FL-Reply) or a Frame Delay Replies (FD-Reply) is lost, so that the frame delay or the frame delay variation measurement can be performed only when no message is lost for obtaining more accurate measurement results;

2) when the sequence number is not supported by the network, the Ingress LSR sets the sequence number as 0, and the Egress LSR accordingly skips the sequence number verification; when the sequence number is supported by the network, the Ingress LSR sets an initial sequence number as 1, and increases successive sequence numbers gradually;

3) the Egress LSR sets an expected initial sequence number as 0, and later checks whether the received sequence number complies with the following equation:

$$\text{a next desired sequence number} = (\text{a desired sequence number} + 1) \bmod 2^{16};$$

If the received sequence number complies with the equation, it indicates that no frame is lost and then normal measurements of the frame delay or the frame delay variation of the MPLS LSP are performed; otherwise, it indicates that frame loss has occurred, and the measurement is aborted.

In embodiments of the present invention, the measurements of performance parameters of the MPLS network are performed through transmitting messages with sequence numbers in the MPLS network. In an embodiment of the present invention, either dedicated messages used for measurement or other messages with sequence numbers, can be transmitted in the network to measure the network performance parameters.

Embodiments of the present invention are explained herein, and the measurements of the frame loss, the frame delay, the frame delay variation and the frame throughput are explained in detail respectively.

I. Frame loss measurement.

Messages for the frame loss measurement are constructed and transmitted in the MPLS network to measure frame loss parameters. The messages include Frame Loss Requests and Frame Loss Replies.

The formats of the Frame Loss Requests (FL-Request) and the Frame Loss Replies (FL-Reply) are shown in Table 1.

Table 1

| Function type (xxHex) | Reserved (all 00Hex) | Sequence Number | LSP Trail Termination Source Identifier | IngressT xFrmCnt | EgressR xFrmCnt | Padding (all 00Hex) | BIP16 |
|---|---|---|---|---|---|---|---|
| 1 octets | 1 octets | 2 octets | 20 octets | 4 octets | 4 octets | 10 octets | 2 octets |

The FL-Request and FL-Reply are identified by different function types which are determined according to the extra codes defined in the ITU-T Y.1711.

The parameter measurement of the frame loss is explained as follows with reference to Table 1.

Frame counters are configured at the Ingress LSR and the Egress LSR to count the sent and received messages respectively. In the frame loss measurement, the Ingress LSR and the Egress LSR are enabled to measure the frame loss parameter respectively. The Ingress LSR sends FL-Requests actively and periodically. The FL-Request carries a sent frame count (IngressTxFrmCnt) and a void received frame count (EgressRxFrmCnt). The Egress LSR constructs an FL-Reply and sends the FL-Reply to the Ingress LSR upon the receipt of the FL-Request. The IngressTxFrmCnt in the FL-Reply is a copy of the IngressTxFrmCnt in the FL-Request, and the EgressRxFrmCnt in the FL-Reply contains a received frame count obtained when the FL-Request is received.

Enabled identifiers of the frame loss measurement, which indicate whether the parameter measurement of the frame loss is performed, are configured at both the Ingress LSR and the Egress LSR for performing the parameter measurement of the frame loss.

Further, a sending interval of the FL-Request with a possible default value of 100ms is configured at the Ingress LSR.

The Egress LSR constructs the FL-Reply upon the receipt of the FL-Request. Each field in the FL-Reply is set as follows:

1) setting the value of Function Type as a value corresponding to FL- Request;

2) setting the value of LSP label so that the FL-Reply may reach the Ingress LSR;

3) recalculating the value of BIP-16;

4) copying the sequence number of the FL-Request to the sequence number of the FL- Reply;

5) copying the IngressTxFrmCnt of the FL-Request to the IngressTxFrmCnt of the FL- Reply;

6) setting the EgressRxFrmCnt value as the frame count value obtained at the Egress LSR upon the receipt of the FL-Request; and

7) changing the Trail Termination Source Identifier (TTSI) into a value corresponding to the Egress LSR.

The parameter of the frame loss is calculated on the basis of the frame count of the sent frames at the Ingress LSR and the frame count of the received frames at the Egress LSR. For the purpose of reducing the error caused by asynchrony of the Ingress LSR and the Egress LSR in the process of the frame count, the parameter of the frame loss may also be calculated based on two consecutive sent frame counts and received frame counts with the following equation:

$$\text{Frame Loss} = |FT2 - FT1| - |FR2 - FR1|;$$

in which FT indicates the total sent frame at the Ingress LSR in the parameter measurement of the frame loss, and the FT indicates the total received frame at the Egress LSR.

II. Frame Delay (FD) measurement.

Messages for the frame delay measurement are constructed and transmitted in the MPLS network to measure frame delay parameters. The messages include Frame Delay Requests (FD-Request) and Frame Delay Replies (FD-Reply), the formats of which are shown in Table 2.

Table 2

| Function type (xxHex) | Reserve (all 00Hex) | Sequence Number | LSP Trail Termination Source Identifier | IngressTime Stamp Sent | Padding (all 00Hex) | BIP16 |
|---|---|---|---|---|---|---|
| 1 octets | 1 octets | 2 octets | 20 octets | 4 octets | 10 octets | 2 octets |

Similarly, the FD-Request and the FD-Reply are identified by different function types which are determined according to the extra codes defined in the ITU-T Y.1711.
The IngressTimestampSent in the message is the time-of-day on the clock of the Ingress LSR, and the Egress-TimestampReceived is the time-of-day on the clock of the Egress LSR.
In the frame delay measurement, the Ingress LSR and the Egress LSR are enabled to measure the frame delay parameter respectively. The FD-Request actively sent by the Ingress LSR carries an IngressTimeStampSent. The Egress LSR constructs the FD-Reply, copies the IngressTimeStampSent of the FD-Request to the FD-Reply, and sends the FD-Reply to the Ingress LSR upon the receipt of the FD-Request.
Enabled identifiers of the frame delay measurement, which indicate whether the parameter measurement of the frame delay is performed, are configured at both the Ingress LSR and the Egress LSR for performing the parameter measurement of the frame delay.
Further, a sending interval of the FD-Request with a possible default value of 100ms is set at the Ingress LSR.
The Egress LSR constructs the FD-Reply upon the receipt of the FD-Request. Each field in the FD-Reply is determined as follows:

1) setting the value of Function Type as a value corresponding to the FD-Request ;

2) setting the value of LSP label so that the FD-Reply may reach the Ingress LSR;

3) recalculating the value of BIP-16;

4) copying the sequence number of the FD-Request to the sequence number of the FD - Reply;

5) copying the IngressTimeStampSent of the FD-Request to the IngressTimeStampSent of the FD - Reply; and

6) changing the TTSI into a value corresponding to the Egress LSR.

The parameter of the frame delay can be measured through a one-way delay measurement or a round trip time measurement, as described in the following description.

(1) One-way delay measurement.

The Ingress LSR sends the FD-Request carrying the Ingress Timestamp Sent. Upon the receipt of the FD-Request, the Egress LSR checks the validity of the FD-Request, including the checking of the sequence number. If the sequence number is not identical with the desired sequence number, the message is ignored; otherwise, the message is determined to be valid. If the message is determined to be valid through the validity check, the time of receiving the FD-Request, the EgressTimestampReceived (RT), is recorded and compared with the Ingress TimestampSent (ST) carried in the received FD-Request to measure the one-way delay.

The equation adopted in the measurement is: FD (one-way delay) = RT - ST + $\Delta$t, in which $\Delta$t indicates the clock difference between the Ingress LSR and the Egress LSR.

In the one-way delay measurement, it is required that the clocks of the Ingress LSR and the Egress LSR are synchronous in the MPLS network, or the Egress LSR has learned the clock difference between the Ingress LSR and the Egress LSR in advance.

(2) Round Trip Time (RTT) measurement.

The Ingress LSR sends the FD-Request carrying the IngressTimestampSent. Upon the receipt of the FD-Request, the Egress LSR constructs and sends the FD-Reply. Upon the receipt of the FD-Reply, the Ingress LSR checks the validity of the FD-Reply, including checking the sequence number. If the sequence number is not identical with the desired sequence number, the message is ignored; otherwise the message is determined to be valid. If the message is determined to be valid through the validity check, the time of receiving the FD-Reply, the Ingress Timestamp Received (RT) is recorded and compared with the Ingress Timestamp Sent (ST) carried in the received FD-Reply to measure the Round Trip Time (RTT), as shown in the equation:

$$FD\ (RTT) = RT - ST.$$

The RTT includes the processing time of the Egress LSR, which can be deducted in the measurement process for ensuring the accuracy of the RTT measurement.

Therefore, two fields may be added into the FD-Request and the FD-Reply for a more accurate RTT measurement, as shown in Table 3.

Table 3

| Function type (xxHex) | Reserve (all 00Hex) | Sequence Number | LSP Trail Termination Source Identifier | Ingress Time Stamp Sent | Egress Time Stamp Recevied | Egress Time Stamp Sent | Padding (all 0) | BIP16 |
|---|---|---|---|---|---|---|---|---|
| 1 octets | 1 octets | 2 octets | 20 octets | 4 octets | 4 octets | 4 octets | 10 octets | 2 octets |

In Table 3,
the information carried by the IngressTimeStampSent indicates the time of sending the FD-Request by the Ingress LSR;
the information carried by the EgressTimeStampReceived indicates the time of receiving the FD-Request by the Egress LSR; and
the information carried by the EgressTimeStampSent indicates the time of sending the FD-Reply by the Egress LSR.

When the IngressTimeStampReceived field is adopted to indicate the time of receiving the FD-Reply by the Ingress LSR, the frame delay parameter can be calculated with the equation:

$$FD \quad (RTT) \quad = \quad (IngressTimeStampReceived \quad - \quad IngressTimeStampSent) \quad -$$
$$(EgressTimeStampSent - EgressTimeStampReceived).$$

The two fields of time stamps are added for obtaining a relatively accurate frame delay value exclusive of the processing time of the Egress LSR.

III. Frame Delay Variation (FDV) measurement.

According to the embodiments of the present invention, the frame delay variation parameter may be calculated with the results of two consecutive frame delay measurements.
When a one-way frame delay measurement is adopted, FDV (one-way delay variation) = FD2 (one-way delay) - FD1 (one-way delay).
Or, when a RTT measurement is adopted, FDV (RTT) = FD2 (RTT) - FD1(RTT).
A statistical average of the frame delay variation parameter can be obtained by averaging the results of multiple measurements.

IV. Frame throughput measurement.

The throughput corresponds to the size of MPLS frames. Messages for the frame throughout measurement are constructed and transmitted in the MPLS network to measure frame throughout parameters. The messages include Frame throughput Requests (LB-Req) and Frame throughput Responses (LB-Res).The parameter measurement of the frame loss includes: filling padding fields of the messages with data of predefined lengths, increasing the sending rate of the LB-Req gradually for each class of frames classified according to data lengths, and keeping a record on whether a frame loss occurs with the LB-Res. When an obvious frame loss is recognized, the sending rate of the LB-Req is recorded as the measurement result of the frame throughput parameter.
The formats of the LB-Req and LB-Res used for measuring the throughput are shown in Table 4:

Table 4

| Function type (0x05, 0x06Hex separately for the LB-Req and LB-Res frame) | Reserve (all 00Hex) | Sequence Number | LSP Trail Termination n Source Identifier | Padding (all 00Hex or random value for the test) | BIP16 |
|---|---|---|---|---|---|
| 1 octets | 1 octets | 2 octets | 20 octets | At least 18 octets | 2 octets |

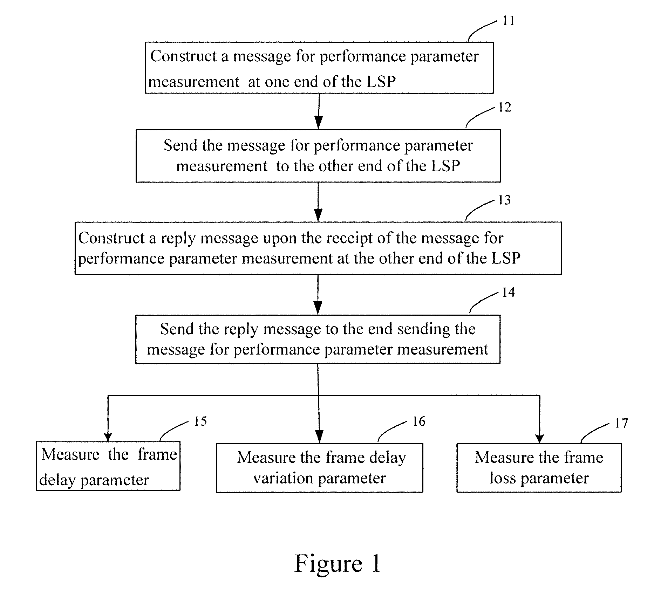

According to embodiments of the present invention, loop back messages can be exchanged between two termination nodes which need a measurement of performance parameter in the MPLS network to measure performance parameters of the MPLS network, i.e., to measure the performance parameters of the MPLS network based on the values of Timestamp Sent or Timestamp Received and the sequence numbers in the loopback messages.
An embodiment of the present invention is explained as follows in detail with reference to the accompanying drawings for further understanding of the present invention.
A flow chart of a method in accordance with the embodiment is shown in Figure 1, including the following steps.
At block 11, a message for performance parameter measurement is constructed at one of the two nodes when a measurement of performance parameter is needed at the two nodes and on the path between the two nodes of the MPLS network. In the embodiment, the message for performance parameter measurement is a loopback request.
The format of the loopback request is shown in Table 5.

Table 5

| Function type (05Hex) | Reserve( all 00Hex) | Sequence Number | LSP TTSI | Time Stamp Sent | Time Stamp Received | Padding (all 00Hex) | BIP16 |
|---|---|---|---|---|---|---|---|
| 1 octets | 1 octets | 2 octets | 20 octets | 4 octets | 4 octets | 10 octets | 2 octets |

All steps of the measurement of performance parameter are performed when the network is available. Therefore, for obtaining more accurate frame delay parameters and frame delay variation parameters, sequence number is added into the loopback request as an accessorial tool in the measurement, based on which frame loss is detected. When a frame is lost, the network may still be available according to the definition of the availability state in the ITU-T Y.1711, which deems that an LSP is unavailable only when the LSP does not recover within 10 seconds after a failure; therefore, the sequence number helps to obtain more accurate frame delay parameters and frame delay variation parameters.

At block 12, the constructed message for performance parameter measurement, i.e., the loopback request, is sent to the other node of the two nodes.

At block 13, the other node constructs a response message, i.e., loopback reply, upon the receipt of the loopback request.

The format of the loopback reply is shown in Table 6.

Table 6

| Function type (06Hex) | Sequence Number | LSP TTSI | Time Stamp Sent | Time Stamp Received | Padding (all 00Hex) | BIP16 |
|---|---|---|---|---|---|---|
| 1 octets | 3 octets | 20 octets | 4 octets | 4 octets | 10 octets | 2 octets |

The TimestampSent in the message is the time-of-day on the clock of the sender; the TimestampReceived in the message is the time-of-day on the clock of the receiver.

In this step, for the purpose of ensuring the application of the measurement and the returning of the loopback reply to the node at the opposite end, the LSR that constructs the loopback reply upon the receipt of the loopback request determines the fields in the loopback reply according to the following steps:

1) constructing a layer 2 framing format on the basis of the accessorial relations between the LSP and the layer 2 frame features recorded upon the establishment or modification of the LSP, wherein the layer 2 frame features includes one of an SMAC (Source MAC) address and a DMAC (Destination MAC) address, or one of a Virtual Path Identifier (VPI) and a Virtual Channel Identifier (VCI), or a Data Link Connection Identifier (DLCI);

2) setting the Function Type of the loopback reply as 0x06;

3) setting the LSP label value so that the loopback reply may reach the sender of the loopback request;

4) recalculating the value of BIP-16;

5) copying the sequence number of the loopback request to the sequence number of the loopback reply;

6) copying the TimeStampSent of the loopback request to the TimeStampReceived of the loopback reply;

7) setting the TimeStampReceived as the time of receiving the loopback request; and

8) changing the Trail Termination Source Identifier (TTSI) into a value corresponding to the LSR that constructs the loopback reply.

At block 14, the other node sends the loopback reply to the node that sent the loopback request.

With the above exchange of the loopback request and the loopback reply, the measurement of performance parameters of the MPLS network can be performed based on the loopback messages between the two nodes.

The measurement of performance parameters of the MPLS network in accordance with the embodiments of the present invention is performed on the basis of the exchanging of the loopback request and the loopback reply between the two nodes, as described in the following description.

At block 15, the normal MPLS LSP frame delay measurement is performed based on the message exchanged between the two nodes.

The frame delay parameter can be measured through a one-way delay measurement or a RTT measurement.

(1) One-way delay measurement.

The sending end of the LSP sends a loopback request carrying the TimeStampSent. The receiving end of the LSP checks the validity of the loopback request upon the receipt of the loopback request. When an accurate measurement is required, the validity check may include checking the sequence number, i.e., it can be configured that whether the sequence number of the request is checked. If the request is valid, the time of receiving the loopback request (RT) is recorded and compared with the time carried in the loopback request of sending the request (ST) for obtaining the one-way frame delay parameter, as shown in the equation:

$$FD = RT - ST + t,$$

in which t indicates the difference between the clocks of the two nodes at the two ends of the LSP.

Therefore, when the clocks at the sending end and the receiving end of the LSP are synchronous, or the receiving end of the LSP has learned the difference between the standard clocks of the two ends, the one-way delay measurement can be used for measuring the one-way frame delay parameter.

(2) Round Trip Time (RTT) measurement.

The sending end of the LSP sends a loopback request carrying the TimeStampSent. The receiving end of the LSP constructs and sends a loopback reply upon the receipt of the request according to the information in the loopback request and the LSP configuration or information negotiated by signaling when the LSP is established. The sending end of the LSP checks the validity of the loopback reply upon the receipt of the reply and, similarly, when the accurate measurement is required, the validity check may include checking the sequence number, i.e., it can be configured whether that the sequence number of the reply is checked. If the reply is valid, the time of receiving the loopback reply (RT) is recorded and compared with the TimeStampSent (ST) carried in the loopback reply for obtaining the RTT parameter, as shown in the equation:

$$FD\ (RTT) = RT - ST.$$

During the RTT measurement, if the time period spent on validity check at the receiving end of the LSP can be obtained, it can be considered deducting the validity check period from the FD (RTT) for obtaining a more accurate frame delay parameter.

At block 16, the frame delay variation parameter is measured based on the message exchanged between the two nodes.

The parameter measurement of the frame delay variation is described in the following description.

The frame delay variation parameter can be calculated with the results of two consecutive frame delay measurements in two ways according to the two methods for measuring the frame delay parameter.

When the one-way frame delay measurement results are used:

FDV (one-way delay variation) = FD2 (one-way delay) - FD 1 (one-way delay);

When the RTT measurement results are used:

$$FDV\ (RTT) = FD2\ (RTT) - FD1\ (RTT).$$

The results of a number of FDV measurements can be averaged to improve the accuracy of the FDV measurement, and the average value of the measurement results may be regarded as the finally result of the FDV measurement.

In practical applications, for the purpose of ensuring the results is accurate, a step may be added before steps 15 and 16 to determine, based on the sequence numbers of the loopback messages, whether a frame loss has occurred, i.e., whether a message is lost in the MPLS network, and the FD and FDV measurements are performed only when no message is lost.

Whether a frame loss has occurred is measured based on the sequence number, which may also be used for other applications beyond the frame loss measurement. The frame loss measurement based on the sequence number includes the following steps.

The sending end of the LSP adds a sequence number in the loopback message, while the same values are set as the initial sequence numbers at both the sending end and the receiving end. The sending end adds 1 to the sequence number value upon the sending of every message. The receiving end checks that whether the frame loss has occurred by verifying whether the received sequence number comply with the following equation:

$$a \text{ next desired sequence number} = (\text{the sequence number of the last received}$$

$$\text{message} + 1) \bmod 2^{16}, \text{ in which } 2^{16} \text{ is the maximum sequence number, i.e., the sequence}$$

$$\text{number revolves between } 0 \text{ and } 2^{16}.$$

message + 1) mod $2^{16}$, in which $2^{16}$ is the maximum sequence number, i.e., the sequence number revolves between 0 and $2^{16}$.

If the received sequence number complies with the equation, it is indicated that no frame is lost; otherwise, it is indicated that the frame loss has occurred in the network. The frame delay parameters and the frame delay variation parameters can be evaluated when no frame loss has occurred.

The sequence number check can be disabled in the configuration if a device does not support the sequence number check, so that the method will be compatible with the device that does not support the sequence number check.

According to the embodiments of the present invention, the frame delay and the frame delay variation measurements can be performed when it is ensured that no frame is lost for producing more accurate measurements, because by the definition of MPLS LSP availability state in the ITU-T Y.1711, the LSP becomes unavailable only when the LSP does not recover within 10 seconds after a failure, so the sequence number will help to obtain more accurate frame delay parameters and the frame delay variation parameters.

Practically, in the embodiments of the present invention, the frame delay and frame delay variation measurements can also be performed without the step of checking the sequence number.

At block 17, the frame loss measurement is performed. Specifically the difference between the counts of the sent loopback requests and received loopback replies in a preset period of time, e.g., 1 second, is measured at the sending end of the LSP. A more accurate frame loss parameter can be obtained by averaging the results of two consecutive measurements of the difference between the counts of the sent loopback requests and received loopback replies, as shown in the equation:

$$\text{Frame Loss} = |FT2 - FT1| - |FR2 - FR1|;$$

in which FT indicates the count of the loopback requests sent by the sending end of the LSP in a preset period of time, e.g. 1 second, and FR represents the count of the loopback replies received by the sending end of the LSP within the preset period of time, e.g. 1 second.

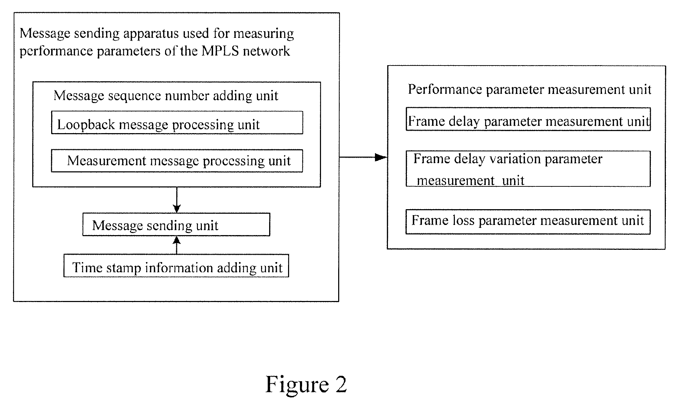

The embodiments of the present invention also provide a system for measuring performance parameters of a Multi-Protocol Label Switching (MPLS) network, as shown in Figure 2, including a message sending apparatus for measuring performance parameters of the MPLS network and a performance parameter measurement unit, as described in the following description.

1) The message sending apparatus for measuring performance parameters of the MPLS network.

The message sending apparatus includes a message sequence number adding unit and a message sending unit.

(1) the message sequence number adding unit

The message sequence number adding unit is used for adding sequence numbers in messages for measuring performance parameters in the MPLS network; and

the message sequence number adding unit includes:

a loopback message processing unit, used for adding sequence numbers in loopback messages of the MPLS network;

or,

a measurement message processing unit, used for adding sequence numbers in at least one of a message for frame loss measurement, a message for frame delay measurement and a message for frame throughput measurement.

(2) the message sending unit

The message sending unit is used for sending the messages with the sequence numbers in the MPLS network.

The apparatus provided by the embodiments of the present invention may also include a time stamp information adding unit, used for adding time stamps of sending or receiving time in the messages for the frame delay measurement or the frame delay variation measurement.

2) The performance parameter measurement unit.

The performance parameter measurement unit is used for measuring the performance parameters of the MPLS network based on the sequence numbers of the messages sent by the message sending apparatus for measuring the performance parameters of the MPLS network.

The performance parameter measurement unit may include a frame delay parameter measurement unit and a frame delay variation parameter measurement unit, used for measuring the frame delay parameter and the frame delay variation parameter respectively based on the messages for performance parameter measurement and the Timestamp Sent and Received values in the messages.

The performance parameter measurement unit may further include a frame loss parameter measurement unit, used for calculating a difference between a count of sent loopback messages and a count of received loopback messages in a preset period of time, or calculating a difference between a total of the sent frames and a total of the received frames, which are carried in messages for frame loss measurement, taking the difference as a measurement result of the frame loss parameter in a node of the MPLS network.

To sum up, a detailed method for the performance parameter measurement of the MPLS LSP is provided by the present invention, including the frame delay measurements, the frame delay variation measurements and the frame loss measurements, which will provide important reference for the MPLS network planning and basis for the SLA conformity check in the existing MPLS network.

The above is only preferred embodiments of this invention. The protection scope of this invention, however, is not limited to the above description. Any change or substitution, within the technical scope disclosed by the present invention, easily occurring to those skilled in the art should be covered by the protection scope of the present invention. Therefore, the protection scope of the present invention should be determined according to claims.

**Claims**

1. A method for measuring performance parameters of a Multi-Protocol Label Switching network, comprising:

setting a sequence number in a message for performance parameter measurement in a Multi-Protocol Label Switching, MPLS network;
measuring a performance parameter of the MPLS network according to the sequence number in a received message.

2. The method of Claim 1, wherein setting the sequence number comprises:

setting the sequence number in a loopback message of the MPLS network;
or
setting the sequence number in a message for frame loss measurement, a message for frame delay measurement and/or a message for frame throughput measurement.

3. The method of Claim 1, further comprising:

setting a time stamp of sending or receiving time in the message for frame delay measurement or the message for frame delay variation measurement.

4. The method of Claim 3, wherein setting the time stamp of sending or receiving time comprises:

   setting the time stamp of sending or receiving time in a loopback request message, a frame loss request message, a frame delay request message, or a frame throughout request message; or setting the time stamp of sending or receiving time in the loopback request message, the frame loss request message, the frame delay request message, of the frame throughout request message and a loopback reply message, a frame loss reply message, a frame delay reply message, or a frame throughout reply message; wherein the loopback reply message, the frame loss reply message, the frame delay reply message or the frame throughout reply message are reply messages from a side receiving the loopback request message, the frame loss request message, the frame delay request message, of the frame throughout request message to a side sending the loopback request message, the frame loss request message, the frame delay request message, of the frame throughout request message.

5. The method of Claim 3, wherein
   fields in the loopback message comprises a function type, a sequence number, an LSP trail termination source identifier, a time stamp of sending time and a time stamp of receiving time;
   or,
   fields in the frame loss measurement message comprises a function type, a sequence number and an LSP trail termination source identifier; and fields in the frame delay measurement message comprises a function type, a sequence number, an LSP trail termination source identifier, a time stamp of sending time and a time stamp of receiving time.

6. The method of Claim 5, wherein the fields in the messages further comprises a reserved field, a padding field and/or a verifying field.

7. The method of Claim 3, wherein measuring the performance parameter of the MPLS network comprises:

   measuring a frame delay parameter or a frame delay variation parameter of the MPLS network according to the messages for performance parameter measurement transmitted in the MPLS network and the time stamp of sending time and the time stamp of receiving time in the messages.

8. The method of Claim 7, further comprising measuring a frame loss parameter:

   calculating, at an MPLS network node, a difference between an amount of the loopback messages sent in a predetermined period of time and an amount of the loopback messages received in the predetermined period of time, and taking the difference as a measurement result of the frame loss parameter; or
   taking a difference between a total of sent frames and a total of received frames carried in the message for frame loss measurement, and taking the difference as the result of the frame loss parameter measurement.

9. The method of any of Claims 1 to 8, wherein measuring the performance parameter comprises measuring a frame delay parameter:

   determining a frame delay parameter, by a receiver of the loopback request message according to a difference between a time stamp of sending time and a time stamp of receiving time in a received loopback request message or a frame delay request message;
   or
   calculating, the frame delay parameter, by a sender of the loopback request message or the frame delay request message, according to a time stamp of sending time for the loopback request message or a time stamp of sending time for the frame delay request message carried by the loopback reply message or carried by the frame delay reply message, and a time of receiving the loopback reply message or a time of receiving the frame delay reply message.

10. The method of Claim 9, wherein determining the frame delay parameter further comprises:

    adjusting, by the receiver of the loopback request message or the frame delay request message, a difference between the time stamp of sending time and the time stamp of receiving time with a standard time difference between the sender of the loopback request message or the frame delay request message and the receiver of the loopback request message or the frame delay request message when the sender and the receiver of the loopback request message or frame delay request message are not synchronized, and obtaining the frame delay parameter;

or

adjusting, by the sender of loopback request message or the frame delay request message, the frame delay parameter calculated according to a time spent on validity checking of the received loopback reply message or the frame delay reply message, and obtaining a definite frame delay parameter.

11. The methods of Claim 9, wherein measuring the performance parameter comprises measuring a frame delay variation parameter:

taking a difference between the results of two frame delay measurements as a measurement result of a frame delay variation parameter;
and / or,
calculating a group of differences between results of two consecutive frame delay measurements; calculating a average value of the group of differences, and taking the average value as the measurement result of the frame delay variation parameter.

12. The method of Claim 9, further comprising:

checking validity of the loopback message, the frame loss message or the frame delay message upon a receipt of the message, and the checking validity comprises checking the validity of the message according to the sequence number of the message; and measuring the performance parameters of the MPLS network when the message is valid.

13. The method of any of Claims 1 to 8, wherein, when an accurate measurement of the frame delay or the frame delay variation parameters is required, measuring the performance parameters of the MPLS network further comprises:

measuring the frame delay parameter or the frame delay variation parameter when determining that no MPLS frame is lost according to a result of the frame loss parameter measurement or the sequence number in the received loopback message or the frame loss message.

14. The method of Claim 13, wherein determining that no MPLS frame is lost according to the sequence number in the received loopback message or the frame loss message comprises:

determining a desired sequence number of the loopback message or the frame loss message at a receiving node according to a setting mode of the sequence number of loopback message or frame loss message;
checking, by a node receiving the loopback message or the frame loss message, whether a sequence number of a received loopback message or a frame loss message is identical with the desired sequence number, and determining that no MPLS frame is lost if the received sequence number is identical with the desired sequence number, otherwise determining that an MPLS frame is lost.

15. The method of Claim 9, wherein measuring the performance parameter of the MPLS network further comprises:

inserting data of different lengths into frame throughput request messages and frame throughput reply messages for frame throughput measurement, and increasing gradually sending rates of the frame throughput request messages according to the frame lengths;
keeping a record on whether a frame loss occurs with the frame throughput reply message, and taking the sending rate of the frame throughput request message with the frame loss as a measurement result of the throughput.

16. A message sending apparatus for measuring performance parameters of a Multi-Protocol Label Switching network, comprising a message sequence number adding unit and a message sending unit, wherein
the message sequence number adding unit, for adding sequence numbers in the messages for measuring performance parameter in a MPLS network; and
the message sending unit, for sending the messages with the sequence numbers in the MPLS network.

**17.** The message sending apparatus of Claim 16, wherein the message sequence number adding unit comprises:

a loopback message processing unit, for adding sequence numbers in loopback messages of the MPLS network; or
a measurement message processing unit, for adding sequence numbers in at least one of a message of frame loss measurement, a message of frame delay measurement and a message of frame throughput measurement.

**18.** The message sending apparatus of Claim 16, further comprising:

a time stamp information adding unit, for setting time stamps of sending or receiving time in a message for frame delay measurement or a message for frame delay variation measurement.

**19.** A system for measuring performance parameters of a Multi-Protocol Label Switching network, comprising the message sending apparatus and a performance parameter measurement unit, wherein
the performance parameter measurement unit, for measuring a Multi-Protocol Label Switching, MPLS network performance parameters based on the sequence numbers of the messages sent by the message sending apparatus for measuring the MPLS network performance parameters.

**20.** The system of Claim 19, wherein the performance parameter measurement unit comprises: a frame delay parameter measurement unit, for measuring a frame delay parameter in the MPLS network based on a message for performance parameter measurement sent in the MPLS network and a time stamp of sending time or a time stamp of receiving time of the message; or a frame delay variation parameter unit, for measuring a frame delay variation parameter in the MPLS network based on the message for performance parameter measurement sent in the MPLS network and the time stamp of sending time or the time stamp of receiving time of the message.

**21.** The system of Claim 20, wherein the performance parameter measurement unit further comprises:

a frame loss parameter measurement unit, for calculating, at an MPLS network node, a difference between a count of sent loopback messages and a count of received loopback messages in a preset period of time, taking the difference as a measurement result of the frame loss parameter; or calculating a difference between a total of the sent messages and a total of received messages carried in messages of the frame loss measurement, taking the difference as the measurement result of the frame loss parameter.

Construct a message for performance parameter measurement at one end of the LSP — 11

Send the message for performance parameter measurement to the other end of the LSP — 12

Construct a reply message upon the receipt of the message for performance parameter measurement at the other end of the LSP — 13

Send the reply message to the end sending the message for performance parameter measurement — 14

Measure the frame delay parameter — 15

Measure the frame delay variation parameter — 16

Measure the frame loss parameter — 17

Figure 1

```
┌─────────────────────────────────────────────┐        ┌──────────────────────────────────────────────┐
│ Message sending apparatus used for measuring │        │                                                │
│ performance parameters of the MPLS network   │        │  Performance parameter measurement unit        │
│                                               │        │                                                │
│  ┌─────────────────────────────────────────┐ │        │ ┌──────────────────────────────────────────┐ │
│  │ Message sequence number adding unit     │ │        │ │Frame delay parameter measurement unit    │ │
│  │ ┌─────────────────────────────────────┐ │ │        │ └──────────────────────────────────────────┘ │
│  │ │ Loopback message processing unit    │ │ │        │ ┌──────────────────────────────────────────┐ │
│  │ └─────────────────────────────────────┘ │ │───────▶│ │ Frame delay variation parameter          │ │
│  │ ┌─────────────────────────────────────┐ │ │        │ │  measurement  unit                        │ │
│  │ │ Measurement message processing unit │ │ │        │ └──────────────────────────────────────────┘ │
│  │ └─────────────────────────────────────┘ │ │        │ ┌──────────────────────────────────────────┐ │
│  └─────────────────────────────────────────┘ │        │ │Frame loss parameter measurement unit     │ │
│                      │                        │        │ └──────────────────────────────────────────┘ │
│              ┌───────▼───────┐                │        └──────────────────────────────────────────────┘
│              │ Message sending unit │         │
│              └───────▲───────┘                │
│  ┌─────────────────────────────────────────┐ │
│  │ Time stamp information adding unit       │ │
│  └─────────────────────────────────────────┘ │
└─────────────────────────────────────────────┘
```

Figure 2

# INTERNATIONAL SEARCH REPORT

| International application No. |
| --- |
| PCT/CN2006/002085 |

**A. CLASSIFICATION OF SUBJECT MATTER**

H04L12/26 (2006.01)i

According to International Patent Classification (IPC) or to both national classification and IPC

**B. FIELDS SEARCHED**

Minimum documentation searched (classification system followed by classification symbols)

H04L12(2006.01)

Documentation searched other than minimum documentation to the extent that such documents are included in the fields searched

Electronic data base consulted during the international search (name of data base and, where practicable, search terms used)

WPI,EPODOC,PAJ, CNPAT,CNKI

MEASURE MPLS NETWORK PERFORMANCE PARAMETER

**C. DOCUMENTS CONSIDERED TO BE RELEVANT**

| Category* | Citation of document, with indication, where appropriate, of the relevant passages | Relevant to claim No. |
| --- | --- | --- |
| Y | US6965572B1 (AT & T CORP ) 15.Nov.2005 (15.11.2005) col 3 line 23 to col 4 line52 | 1-21 |
| Y | CN1656750A(SONY CORP ) 17.Aug.2005 （17.08.2005） page 1 line 25 to page 2 line26 | 1-21 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.Nov.2006 （15.11.2006） | 1 4 · DEC 2006 (1 4 · 1 2 · 2 0 0 6) |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>ZHU Shaohua<br><br>Telephone No. 86-10-62084551 |

Form PCT/ISA /210 (second sheet) (April 2005)

## INTERNATIONAL SEARCH REPORT
Information on patent family members

| International application No. |
|---|
| PCT/CN2006/002085 |

| Patent Documents referred in the Report | Publication Date | Patent Family | Publication Date |
|---|---|---|---|
| US6965572B1 | 15.11.2005 | none | |
| CN1656750A | 17.08.2005 | WO03098884A1 | 27.11.2003 |
| | | JP2003338841A | 28.11.2003 |
| | | EP1507369A1 | 16.02.2005 |
| | | KR20040111669A | 31.12. 2004 |
| | | US2005182850A1 | 18.08.2005 |

Form PCT/ISA /210 (patent family annex) (April 2005)